# EUROPÄISCHE PATENTANMELDUNG

(11) **EP 4 015 546 A1**
(43) Veröffentlichungstag der Anmeldung: **22.06.2022**
(21) Anmeldenummer: 20214008.3
(22) Anmeldetag: 15.12.2020
(51) Int. Cl.: C08G 18/02, C08G 18/10, C08G 18/28, C08G 18/70, C08G 18/73, C08G 18/78, C08G 18/79, C09D 175/04

(54) **NICHTIONISCH HYDROPHILIERTE POLYISOCYANATE MIT SEHR NIEDRIGEM MONOMERGEHALT**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft ein Verfahren zur Herstellung hydrophil modifizierter Polyisocyanate mit sehr niedrigem Gehalt an monomeren Diisocyanaten, die nach diesem Verfahren erhältlichen oder erhaltenen Polyisocyanate und die Verwendung dieser zur Herstellung von Polyurethankunststoffen. Außerdem betrifft die Erfindung Beschichtungsmittel enthaltend die nichtionisch hydrophil modifizierten Polyisocyanate sowie die mit diesen Beschichtungsmitteln beschichteten Substrate.

## Beschreibung

Die Erfindung betrifft ein Verfahren zur Herstellung hydrophil modifizierter Polyisocyanate mit niedrigem Gehalt an monomeren Diisocyanaten, die nach diesem Verfahren erhältlichen oder erhaltenen Polyisocyanate und die Verwendung dieser zur Herstellung von Polyurethankunststoffen. Außerdem betrifft die Erfindung Beschichtungsmittel enthaltend die nichtionisch hydrophil modifizierten Polyisocyanate sowie die mit diesen Beschichtungsmitteln beschichteten Substrate.

Wässrige Lacksysteme haben sich heute für verschiedene Anwendungsbereiche als umweltfreundliche Alternative zu lösemittelhaltigen Beschichtungsmitteln fest etabliert. Eine besondere Rolle als Rohstoff für qualitativ hochwertige wässrige Lacke spielen dabei hydrophil-modifizierte Polyisocyanate, da sie als wasserdispergierbare Vernetzerkomponenten die Formulierung wässriger Zweikomponenten-Polyurethan(2K-PUR)-Lacke ermöglichen.

Eine einfache und preiswerte Methode zur Herstellung wasserdispergierbarer Polyisocyanate ist die anteilige Umsetzung hydrophober Polyisocyanate mit hydrophilen Polyetheralkoholen (siehe z. B. EP-A 0 959 087, Seite 2, Zeilen 25 - 46). Im technischen Maßstab wird diese Umsetzung üblicherweise bei Temperaturen von ca. 80 bis 130°C durchgeführt, um wirtschaftlich akzeptable Reaktionszeiten zu gewährleisten.

Bei der Hydrophilierung von Polyisocyanaten, die Uretdionstrukturen enthalten, kann sich in diesem Temperaturbereich allerdings deren Thermolabilität nachteilig bemerkbar machen, die zu einem deutlichen Anstieg an monomeren Diisocyanaten führen kann.

Zukünftig werden auch hydrophile Polyisocyanate unter die von der Europäischen Chemikalienagentur (ECHA) beschlossene Beschränkung zum Umgang mit Stoffen oder Gemischen fallen, deren Gehalt an freien monomeren Diisocyanaten 0,10 Gew.-% oder mehr beträgt. Für einen sichere gewerbsmäßige Anwendung als Vernetzerkomponenten in wässrigen 2K-PUR-Lacken sind daher hydrophile Polyisocyanate mit weniger als 0,10 % an monomeren Diisocyanaten gewünscht.

Die EP 3 428 207 A1 beschreibt hydrophile Polyisocyanatzusammensetzungen mit speziellen Verhältnissen an Uretonimin- und Iminooxadiazindiongruppen, jeweils bezogen auf die vorhandenen Isocyanuratgruppen, woraus sich ein Verhältnis von Uretonimin- zu Uretdiongruppen von 0,20 bis 50 mol-% ergibt. Die Uretonimingruppen werden hier absichtlich durch Erhitzen der Polyisocyanate vor der Hydrophilierungsreaktion gebildet. Nachteilig hieran ist, dass die thermisch labilen Uretonimingruppen zwingend vorhanden sein müssen und nicht gewährleistet ist, dass der Gehalt an monomeren Diisocyanaten zuverlässig unter 0,10 Gew-% gehalten werden kann.

Allerdings können auch bereits sehr geringe Mengen an Uretdionstrukturen in einem hydrophoben Polyisocyanat während der Umsetzung mit hydrophilen Polyetheralkoholen unter den üblichen Bedingungen durch Rückspaltung den Monomergehalt auf Werte deutlich größer als 0,10 Gew.-% steigen lassen, selbst wenn das hydrophobe Polyisocyanat anfangs einen Diisocyanatgehalt von weniger als 0,10 Gew.-% aufwies.

Aufgabe der vorliegenden Erfindung war es daher ein neues Verfahren zur Herstellung nichtionisch hydrophil modifizierter Polyisocyanate zur Verfügung zu stellen, nach dem sich auch Uretdionstrukturen und gegebenfalls Uretonimingruppen aufweisende hydrophobe Polyisocyanate mit hydrophilen Polyetheralkoholen umsetzen lassen, ohne dass es aufgrund von Uretdionspaltung und Uretoniminspaltung zu einem merklichen Anstieg an monomeren Diisocyanaten über 0,10 Gew.-% kommt.

Diese Aufgabe konnte mit der Bereitstellung des nachstehend näher beschriebenen Verfahrens gelöst werden. Das erfindungsgemäße Verfahren basiert auf der überraschenden Beobachtung, dass die Tendenz zur Uretdionspaltung sowie Uretoniminspaltung und damit der Anstieg des Gehaltes an monomeren Diisocyanaten in hohem Maße mit der Qualität der eingesetzten Polyetheralkohole korreliert. Üblicherweise werden die zur Polyisocyanat-Hydrophilierung eingesetzten Polyetheralkohole durch Alkali-katalysierte Addition von Alkylenoxiden, insbesondere Ethylenoxid, an Startermoleküle mit mindestens einem aktiven Wasserstoffatom hergestellt. Im Anschluss an die Additionsreaktion wird der alkalische Katalysator dann im Allgemeinen mit einer anorganischen oder organischen Säure neutralisiert und das sich dabei bildende Salz aus dem Polyetheralkohol entfernt. Wie jetzt überraschenderweise gefunden wurde, führt die Umsetzung von Uretdiongruppen und gegebenfalls Uretonimingruppen enthaltenden Polyisocyanaten mit hydrophilen Polyetheralkoholen, die mit Phosphorsäure oder Phosphorsäureestern neutralisiert wurden zu einem deutlichen Anstieg an monomeren Diisocyanaten, während bei der Umsetzung mit phosphorfreien Polyetheralkoholen oder solchen, die weniger als 50 ppm an Phosphor aufweisen, keine Uretdionspaltung und Uretoniminspaltung zu beobachten ist.

Gegenstand der vorliegenden Erfindung ist ein Verfahren zur Herstellung hydrophil modifizierter Polyisocyanate mit einem Gehalt an monomeren Diisocyanaten von weniger als 0,10 Gew.-%, umfassend eine Umsetzung von
A) mindestens einer Polyisocyanatkomponente mit aliphatisch, cycloaliphatisch, araliphatisch und/oder aromatisch gebundenen Isocyanatgruppen, die mindestens Uretdionstrukturen und weniger als 0,20 mol-% an Uretoniminstrukturen bezogen auf die Uretdionstrukturen aufweist, mit
B) mindestens einer nichtionisch hydrophilen organischen Verbindung, die mindestens eine gegenüber Isocyanaten reaktive Gruppe aufweist,
wobei die nichtionisch hydrophile organische Verbindung B) einen Gehalt an Phosphor von höchstens 50 ppm aufweist, und der Gesamtgehalt an Phosphor bezogen auf die Komponenten A) und B) des hydrophil modifizierten Polyisocyanats höchstens 20 ppm beträgt.

Gegenstände der Erfindung sind auch nichtionisch hydrophil modifizierte Polyisocyanate, die Uretdionstrukturen und weniger als 0,20 mol-% an Uretoniminstrukturen bezogen auf die Uretdionstrukturen enthalten und weniger als 0,10 Gew.-% an monomeren Diisocyanaten und höchstens 20 ppm an Phosphor aufweisen, sowie ihre Verwendung als Ausgangskomponenten bei der Herstellung von Polyurethankunststoffen, insbesondere als Vernetzer für wasserlösliche oder -dispergierbare Lackbindemittel oder Lackbindemittelkomponenten mit gegenüber Isocyanatgruppen reaktionsfähigen Gruppen bei der Herstellung von Überzügen unter Verwendung von wässrigen Beschichtungsmitteln auf Basis derartiger Bindemittel oder Bindemittelkomponenten.

Bevorzugt bedeuten erfindungsgemäß die Ausdrücke "umfassend" oder "enthaltend", "im Wesentlichen bestehend aus" und besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

Eine "organische Verbindung" oder "organischer Rest" enthält mindestens eine Einheit, die eine kovalente Kohlenstoff-Wasserstoff-Bindung umfasst.

Vorliegend ist der Begriff "aliphatisch" definiert als nicht-aromatische Kohlenwasserstoffgruppen, die gesättigt oder ungesättigt sind.

Vorliegend ist der Begriff "araliphatisch" definiert als Kohlenwasserstoffreste, die sowohl aus einer aromatischen als auch aus einer gesättigten oder ungesättigten Kohlenwasserstoffgruppe bestehen, die direkt an den aromatischen Rest gebunden ist.

Vorliegend ist der Begriff "alicyclisch" oder "cycloaliphatisch" definiert als gegebenenfalls substituierte, carbocyclische oder heterocyclische Verbindungen oder Einheiten, die nicht aromatisch sind.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens einer nichtionisch hydrophilen organischen Verbindung" bedeutet daher beispielsweise, dass nur eine Art von Verbindung oder mehrere verschiedene Arten von Verbindungen dieser Art, ohne Angaben über die Menge der einzelnen Verbindungen zu machen, enthalten sein können.

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Geeignete Polyisocyanate A) für das erfindungsgemäße Verfahren sind beliebige, durch Modifizierung einfacher aliphatischer, cycloaliphatischer, araliphatischer und/oder aromatischer Diisocyanate hergestellte Polyisocyanate, die mindestens Uretdionstrukturen aufweisen.

Geeignete Diisocyanate zur Herstellung der Polyisocyanate A) können auf verschiedene Weise, beispielsweise durch Phosgenierung der korrespondierenden Diamine in der Flüssig- oder Gasphase oder auf phosgenfreien Weg, wie z. B. durch thermische Urethanspaltung, erhalten werden. Bevorzugte Diisocyanate sind solche des Molekulargewichtsbereichs 140 bis 400 mit aliphatisch, cycloaliphatisch, araliphatisch und/oder aromatischgebundenen Isocyanatgruppen, wie z. B. 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis(isocyanatomethyl)benzol (Xylylendiisocyanat, XDI), 1,3- und 1,4-Bis(2-isocyanatopropan-2-yl)benzol (Tetramethylxylylendiisocyanat, TMXDI), 2,4- und 2,6-Diisocyanatotoluol (TDI), 2,4'- und 4,4'-Diisocyanatodiphenylmethan (MDI), 1,5-Diisocyanatonaphthalin oder Mischungen aus mindestens zwei solcher Diisocyanate.

Neben Uretdionstrukturen können die beim erfindungsgemäßen Verfahren eingesetzten Polyisocyanate A) gegebenenfalls zusätzlich auch Isocyanurat-, Iminooxadiazindion-, Allophanat-, Biuret-, Urethan- und/oder Oxadiazintrionstrukturen aufweisen.

Die Herstellung der Polyisocyanate A) erfolgt nach an sich bekannten Methoden, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396, EP-A 0 798 299, EP-A 0 986 009, EP-A 0 962 454, EP-A 0 962 455, EP-A 2 785 760, EP-A 2 883 895, EP-A 3 107 922, EP-A 3 107 948 und EP-A 3 337 836 beispielhaft beschrieben sind.

Bei der Herstellung dieser Polyisocyanate A) schließt sich an die eigentliche Modifizierungsreaktion in der Regel ein weiterer Verfahrensschritt zur Abtrennung der nicht umgesetzten überschüssigen monomeren Diisocyanate an. Diese Monomerenabtrennung erfolgt nach an sich bekannten Verfahren vorzugsweise durch Dünnschichtdestillation im Vakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan.

Bevorzugt kommen beim erfindungsgemäßen Verfahren Polyisocyanate A) zum Einsatz, die einen Gehalt an monomeren Diisocyanaten von weniger als 0,14 Gew.-%, vorzugsweise weniger als 0,12 Gew.-%, besonders bevorzugt von weniger als 0,10 Gew.-% aufweisen. Die Rest-Monomeren Gehalte werden nach DIN EN ISO 10283:2007-11 gaschromatographisch mit internem Standard bestimmt.

Abhängig von ihrem jeweiligen Herstellverfahren können die beim erfindungsgemäßen Verfahren eingesetzten Polyisocyanatkomponente A) gegebenenfalls Phosphor in einer Menge von bis zu 28 ppm, vorzugsweise bis zu 25 ppm, besonders bevorzugt bis zu 20 ppm enthalten, der beispielsweise in Form abgestoppter Oligomerisierungskatalysatoren vorliegt. Die Bestimmung dieser Phosphorgehalte erfolgt im Rahmen der vorliegenden Erfindung durch induktiv gekoppelte Plasma-Atom-Emissionsspektrometrie (ICP-OES) nach DIN EN ISO 11885:2009-09 nach Mikrowellenaufschluss. Die Nachweisgrenze für Phosphor liegt bei diesem Verfahren bei <1 ppm.

In den Polyisocyanaten A) beträgt der Gehalt an Uretdionstrukturen mindestens 0,6 mol-%, bevorzugt von 0,8 bis 25 mol-%, besonders bevorzugt von 1 bis 20 mol-%, ganz besonders bevorzugt von 1 bis 15 mol-%, jeweils bezogen auf die Gesamtmenge aller im Polyisocyanat vorliegenden Uretdion-, gegebenenfalls Isocyanurat-, Iminooxadiazindion-, Allophanat-, Biuret-, Urethan- und/oder Oxadiazintrionstrukturen. Der Gehalt an Uretoniminstrukturen in den Polyisocyanaten A) beträgt, falls überhaupt nachweisbar, weniger als 0,20 mol-%, bevorzugt weniger als 0,15 mol-%, besonders bevorzugt weniger als 0,10 mol-% bezogen auf die Uretdionstrukturen.

Die Gehalte (mol-%) der in den Polyisocyanaten A) vorliegenden Uretdion-, gegebenenfalls Isocyanurat-, Iminooxadiazindion-, Allophanat-, Biuret-, Urethan- und/oder Oxadiazintrionstrukturen werden aus den Integralen protonenentkoppelter ¹³C-NMR-Spektren errechnet und beziehen sich jeweils auf die Summe an vorliegenden Uretdion-, Isocyanurat-, Allophanat-, Biuret-, Iminooxadiazindion- und/oder Oxadiazintrionstrukturen. Die Gehalte (mol-%) an gegebenenfalls in den Polyisocyanaten A) vorliegenden Uretonimistrukturen wurden ebenfalls aus den Integralen der protonenentkoppelten ¹³C-NMR-Spektren errechnet und beziehen sich auf Uretdionstrukturen. Im Falle von in CDCl₃ gelösten HDI-Polyisocyanaten weisen die einzelnen Strukturelemente folgende chemische Verschiebungen (in ppm) auf: Uretdion: 157.1; Isocyanurat: 148.4; Iminooxadiazindion: 147.8, 144.3 und 135.3; Allophanat: 155.7 und 153.8, Biuret: 155,5; Urethan: 156,3; Oxadiazintrion: 147,8 und 143,9; Uretonimin: 158,7 und 144,6.

Geeignete Polyisocyanate A) sind auch beliebige Mischungen aus mindesten zwei Polyisocyanaten der genannten Art, wobei in diesen Mischungen auch solche Polyisocyanate zum Einsatz gelangen können, die völlig frei von Uretdionstrukturen sind, sofern die Mischungen den vorstehend für die Polyisocyanate A) gemachten Angaben bezüglich der Gehalte an Uretdion- und Uretoniminstrukturen entsprechen.

Bevorzugte Polyisocyanate A) sind solche der genannten Art, die neben Uretdionstrukturen zusätzlich mindestens Isocyanuratstrukturen enthalten.

Polyisocyanate mit araliphatisch und/oder aromatisch gebundenen Isocyanatgruppen werden beim erfindungsgemäßen Verfahren, falls überhaupt, im Mengen von höchstens 20 Gew.-%, vorzugsweise von höchsten 10 Gew.-%, bezogen auf die Gesamtmenge an Polyisocyanaten A) mitverwendet. Besonders bevorzugte Polyisocyanate A) für das erfindungsgemäße Verfahren sind solche der genannten Art mit ausschließlich aliphatisch und/oder cycloaliphatisch gebundenen Isocyanatgruppen, die frei von Uretonimingruppen sind bzw. in denen Uretonimingruppen nicht nachweisbar sind.

Ganz besonders bevorzugte Polyisocyanate A) sind solche auf Basis von PDI, HDI, IPDI und/oder 2,4'- und 4,4'-Diisocyanatodicyclohexylmethan.

Die vorstehend als geeignet, bevorzugt, besonders bevorzugt und ganz besonders bevorzugt genannten Polyisocyanate A) enthalten Uretdionstrukturen und gegebenenfalls vorzugsweise Isocyanuratstrukturen und weisen eine mittlere NCO-Funktionalität von 2,3 bis 5,0, vorzugsweise von 2,5 bis 4,5, sowie einen Gehalt an Isocyanatgruppen von 6,0 bis 26,0 Gew.-%, vorzugsweise von 8,0 bis 25,0 Gew.-%, besonders bevorzugt 10,0 bis 24,0 Gew.-% auf.

Ausgangsverbindungen B) für das erfindungsgemäße Verfahren sind beliebige nichtionisch hydrophile organische Verbindungen mit mindestens einer gegenüber Isocyanaten reaktiven Gruppe, die einen Gehalt an Phosphor von höchstens 50 ppm aufweisen.

Geeignete Ausgangsverbindungen B) sind beispielsweise ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyether, deren Alkylenoxideinheiten zu mindestens 70 mol-%, vorzugsweise zu mindestens 80 mol-% aus Ethylenoxideinheiten bestehen.

Bevorzugte Polyalkylenoxidpolyetheralkohole B) sind solche, die unter Verwendung der oben genannten Monoalkohole des Molekulargewichtsbereiches 32 bis 150 als Startermoleküle hergestellt wurden. Besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Die nichtionisch hydrophilen Verbindungen B) weisen vorzugsweise einen pH-Wert, gemessen an einer 5 %igen Lösung in Wasser, von 4,0 bis 8,0, vorzugsweise von 4,5 bis 7,5, besonders bevorzugt von 5,0 bis 7,0 auf.

Die eingesetzte Menge an nichtionisch hydrophilen Verbindungen B) kann beim erfindungsgemäßen Verfahren über einen breiten Bereich frei gewählt werden. Bevorzugt kommen nichtionisch hydrophile Verbindungen B) beim erfindungsgemäßen Verfahren in Mengen von bis zu 30 Gew.-%, besonders bevorzugt von 2 bis 25 Gew.-%, ganz besonders bevorzugt von 5 bis 20 Gew.-% und insbesondere von 9 bis 17 Gew.-%, bezogen auf die Gesamtmenge der verwendeten Ausgangskomponenten A) und B) zum Einsatz.

Erfindungswesentlich ist, dass die nichtionisch hydrophilen Verbindungen B) einen Gehalt an Phosphor von höchstens 50 ppm, vorzugsweise von höchstens 40 ppm, besonders bevorzugt von höchstens 30 ppm und ganz besonders bevorzugt keinen nachweisbaren Phosphor aufweisen, wobei die Phosphorgehalte durch induktiv gekoppelte Plasma-Atom-Emissionsspektrometrie (ICP-OES) nach DIN EN ISO 11885:2009-09 nach Mikrowellenaufschluss bestimmt werden. Die Nachweisgrenze für Phosphor liegt bei diesem Verfahren bei <1 ppm.

Der Gesamtgehalt an Phosphor in denn aus den Komponenten A) und B) bestehenden erfindungsgemäßen hydrophil modifizierten Polyisocyanaten, der ebenfalls nach der vorstehend beschriebenen ICP-OES-Methode bestimmt werden kann, beträgt höchsten 20 ppm, vorzugsweise von 3 bis 19 ppm, besonders bevorzugt von 5 bis 18 ppm.

Der Gesamtgehalt an Phosphor in den erfindungsgemäßen hydrophil modifizierten Polyisocyanaten kann aber auch auf einfache Weise aus den Phosphorgehalten der Polyisocyanatkomponenten A) und der hydrophilen Verbindungen B) rechnerisch ermittelt werden. In die Berechnung des Gesamtgehaltes an Phosphor gehen dabei auch die Mengen an Phosphor mit ein, die beim erfindungsgemäßen Verfahren gegebenenfalls in Form saurer Phosphorverbindungen der Polyisocyanatkomponente A) und/oder der nichtionisch hydrophilen organischen Verbindung B) vor und/oder während der Umsetzung zur Stabilisierung oder Neutralisation basischer Katalysatorreste zugesetzt werden.

Solche sauren Phosphorverbindungen sind beispielsweise Phosphorsäure, Phosphorsäureester, wie z. B. Methylphosphat, Ethylphosphat, n-Butylphosphat, n-Hexylphosphat, 2-Ethylhexylphosphat, Isooctylphosphat, n-Dodecylphosphat, Dimethylphosphat, Diethylphosphat, Di-n-propylphosphat, Di-n-butyIphosphat, Di-n-amylphosphat, Disoamylphosphat, Di-n-decylphosphat, Diphenylphosphat und Dibenzylphosphat, und/oder Phosphonsäureester, wie z. B. Methylphosphonat, Ethylphosphonat, iso-Propylphosphonat, n-Propylphosphonat, n-Butylphosphonat, iso-Butylphosphonat, sek-Butylphosphonat, tert-Butylphosphonat, n-Hexylphosphonat, n-Heptylphosphonat, n-Octylphosphonat, n-Decylphosphonat, n-Dodecylphosphonat, 2-Ethylhexylphosphonat und 2-Propylheptylphosphonat.

Das erfindungsgemäße Verfahren wird vorzugsweise lösemittelfrei durchgeführt. Gegebenenfalls können aber auch geeignete, gegenüber den reaktiven Gruppen der Ausgangskomponenten, insbesondere gegenüber Isocyanatgruppen inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, l-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Butylglykolacetat, Butyldiglykolacetat, 1,3-Dioxolan, N-Methylpyrrolidon und N-Methylcaprolactam, oder beliebige Gemische solcher Lösemittel.

Zur Durchführung des erfindungsgemäßen Verfahrens werden die Ausgangskomponenten A) und B) im allgemeinen bei Temperaturen von 40 bis 180 °C, vorzugsweise 50 bis 150 °C, unter Einhaltung eines NCO/OH-Äquivalent-Verhältnisses von 2:1 bis 400:1, vorzugsweise von 4:1 bis 140:1, vorzugsweise bis zum Erreichen des theoretisch errechneten NCO-Gehalts miteinander umgesetzt, wobei der Verlauf der Umsetzung durch z. B. titrimetrische Bestimmung des NCO-Gehaltes verfolgt werden kann. Die Bestimmung des NCO-Gehaltes erfolgt vorzugsweise titrimetrisch nach DIN EN ISO 11909:2007-05.

Dabei kann die Umsetzung der Polyisocyanatkomponente A) mit den nichtionisch hydrophilen Verbindungen B) beispielsweise bis zu dem einer vollständigen Urethanisierung entsprechenden NCO-Gehalt erfolgen. Diese Umsetzung kann unkatalysiert geschehen, zur Reaktionsbeschleunigung können aber auch die üblichen aus der Polyurethanchemie bekannten Urethanisierungskatalysatoren mitverwendet werden, beispielsweise tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylcyclohexylamin, N,N'-Dimethylpiperazin oder Metallsalze wie Eisen(III)-chlorid, Zinkchlorid, Zink-octoat, Zink-2-ethylcaproat, Zink-acetylacetonat, Zinn(II)-octoat, Zinn(II)-ethylcaproat, Zinn(II)-palmitat, Dibutylzinn(IV)-dilaurat, Zirconium-(IV)-2-etbyl-1-bexanoat, Zirconium-(IV)-neodecanoat, Zirconium-(IV)-naphthenat, Zirkonium-(IV)-acetylacetonat, Aluminium-tri(ethylacetoacetat), Wismut(III)-2-ethylhexanoat, Wismut(III)-octoat, Wismut(III)-neodecanoat und Molybdänglykolat.

Diese Katalysatoren kommen gegebenenfalls in Mengen von 0,001 bis 2,0 Gew.-%, bevorzugt 0,01 bis 0,2 Gew.-%, bezogen auf die Gesamtmenge der verwendeten Ausgangskomponenten A) und B) zum Einsatz.

Die Umsetzung kann beispielsweise aber auch nach dem in EP-B 0 959 087 beschriebenen Verfahren so geführt werden, dass die durch NCO/OH-Reaktion primär gebildeten Urethangruppen zumindest anteilig, vorzugsweise zu mindestens 60 mol-%, zu Allophanatgruppen weiter umgesetzt werden. In diesem Fall werden Reaktionspartner im oben genannten NCO/OH-Äquivalentverhältnis bei Temperaturen von 40 bis 180 °C, vorzugsweise 50 bis 150 °C, in der Regel in Gegenwart der in der zitierten Patentschrift angeführten, zur Beschleunigung der Allophanatisierungsreaktion geeigneten Katalysatoren, insbesondere Zinkverbindungen, wie z. B. Zink-(II)-n-octanoat, Zink-(II)-2-ethyl-1-hexanoat oder Zink-(II)-stearat, zur Reaktion gebracht.

Diese Allophanatisierungskatalysatoren kommen gegebenenfalls in Mengen von 0,001 bis 2,0 Gew.-%, bevorzugt 0,01 bis 0,2 Gew.-%, bezogen auf die Gesamtmenge der verwendeten Ausgangskomponenten A) und B) zum Einsatz.

Bei der katalysierten Umsetzung der Komponenten A) und B) werden die eingesetzten Katalysatoren nach Erreichen des angestrebten NCO-Gehaltes in der Regel chemisch abgestoppt. Hierfür geeignete Katalysatorgifte sind beispielsweise anorganische Säuren wie Salzsäure, phosphorige Säure oder Phosphorsäure, Säurechloride wie Acetylchlorid, Benzoylchlorid oder Isophthaloyldichlorid, Sulfonsäuren und Sulfonsäureester, wie Methansulfonsäure, p-Toluolsulfonsäure, Trifluormethansulfonsäure, Perfluorbutansulfonsäure, p-Toluolsulfonsäuremethylester und -ethylester, Mono- und Dialkylphosphate wie Monotridecylphosphat, Dibutylphosphat und Dioctylphosphat, aber auch silylierte Säuren, wie Methansulfonsäuretrimethylsilylester, Trifluormethansulfonsäuretrimethylsilylester, Phosphorsäure-tris-(trimethylsilylester) und Phosphorsäurediethylester-trimethylsilylester.

Falls zur Abstoppung der gegebenenfalls beim erfindungsgemäßen Verfahren mitzuverwendenden Katalysatoren phosphorhaltige Katalysatorgifte der genannten Art eingesetzt werden, wird deren Phosphorgehalt nicht dem Gesamtgehalt an Phosphor des aus den Komponenten A) und B) bestehenden hydrophil modifizierten Polyisocyanats zugerechnet. Die Bestimmung des Gesamtgehalt an Phosphor in den erfindungsgemäßen hydrophil modifizierten Polyisocyanaten erfolgt in diesem Fall rechnerisch aus den Phosphorgehalten der Polyisocyanatkomponenten A) und der hydrophilen Verbindungen B) und gegebenenfalls beim erfindungsgemäßen Verfahren vor und/oder während der Umsetzung zur Stabilisierung oder Neutralisation basischer Katalysatorreste zugesetzter Mengen saurer Phosphorverbindungen.

Unter Verwendung von phosphorfreien Polyetheralkoholen oder solchen, die weniger als 50 ppm an Phosphor aufweisen, liefert das erfindungsgemäße Verfahren reproduzierbar Uretdionstrukturen und gegebenfalls Uretonimingruppen enthaltende hydrophile Polyisocyanate mit einem Gehalt an monomeren Diisocyanaten von weniger als 0,10 Gew.-%. Uretdionspaltung und Uretoniminspaltung tritt, falls überhaupt, in so geringen Maße auf, dass kein negativer Einfluss auf den Monomergehalt zu beobachten ist. Die nach dem erfindungsgemäßen Verfahren erhältliche oder erhaltenen nichtionisch hydrophil modifizierten Polyisocyanate sind ebenfalls Gegenstand der vorliegenden Erfindung.

Eine weitere bevorzugte Ausführungsform der Erfindung sind nichtionisch hydrophil modifizierte Polyisocyanate, die von 0,8 bis 25 mol-%, besonders bevorzugt von 1 bis 20 mol-% und ganz besonders bevorzugt von 1 bis 15 mol-% Uretdionstrukturen, jeweils bezogen auf die Gesamtmenge aller im Polyisocyanat vorliegenden Uretdion-, gegebenenfalls Isocyanurat-, Iminooxadiazindion-, Allophanat-, Biuret-, Urethan- und/oder Oxadiazintrionstrukturen, und weniger als 0,20 mol-% an Uretoniminstrukturen bezogen auf die Uretdionstrukturen enthalten und weniger als 0,10 Gew.-% an monomeren Diisocyanaten und höchstens 20 ppm an Phosphor aufweisen.

Eine weitere bevorzugte Ausführungsform der Erfindung sind nichtionisch hydrophil modifizierte Polyisocyanate, die von 0,8 bis 25 mol-% Uretdionstrukturen, bezogen auf die Gesamtmenge aller im Polyisocyanat vorliegenden Uretdion-, gegebenenfalls Isocyanurat-, Iminooxadiazindion-, Allophanat-, Biuret-, Urethan- und/oder Oxadiazintrionstrukturen, und weniger als 0,20 mol-% an Uretoniminstrukturen bezogen auf die Uretdionstrukturen enthalten und weniger als 0,10 Gew.-% an monomeren Diisocyanaten und von 3 bis 19 ppm, bevorzugt von 5 bis 18 ppm, an Phosphor aufweisen.

Eine weitere bevorzugte Ausführungsform der Erfindung sind nichtionisch hydrophil modifizierte Polyisocyanate, die von 0,8 bis 25 mol-% Uretdionstrukturen, bezogen auf die Gesamtmenge aller im Polyisocyanat vorliegenden Uretdion-, gegebenenfalls Isocyanurat-, Iminooxadiazindion-, Allophanat-, Biuret-, Urethan- und/oder Oxadiazintrionstrukturen, und weniger als 0,15 mol-%, bevorzugt weniger als 0,10 mol-% an Uretoniminstrukturen bezogen auf die Uretdionstrukturen enthalten und weniger als 0,10 Gew.-% an monomeren Diisocyanaten und höchstens 20 ppm an Phosphor aufweisen und wobei der Gehalt an Uretoniminstrukturen besonders bevorzugt unterhalb der Nachweisgrenze liegt.

Eine weitere bevorzugte Ausführungsform der Erfindung sind Polyether modifizierte Polyisocyanate, die von 0,8 bis 25 mol-% Uretdionstrukturen, bezogen auf die Gesamtmenge aller im Polyisocyanat vorliegenden Uretdion-, gegebenenfalls Isocyanurat-, Iminooxadiazindion-, Allophanat-, Biuret-, Urethan- und/oder Oxadiazintrionstrukturen, und weniger als 0,20 mol-% an Uretoniminstrukturen bezogen auf die Uretdionstrukturen enthalten und weniger als 0,10 Gew.-% an monomeren Diisocyanaten und höchstens 20 ppm an Phosphor aufweisen, erhältlich oder erhalten durch Umsetzung von wenigstens einer Polyisocyanatkomponente A) auf Basis von PDI und/oder HDI mit B) mindestens eines Polyethylenglycolmonomethyletheralkohols, der im statistischen Mittel 5 bis 25 Ethylenoxideinheiten aufweist.

Die erfindungsgemäßen hydrophilen, Uretdionstrukturen und gegebenenfalls Uretonimingruppen enthaltenden Polyisocyanate stellen wertvolle Ausgangsmaterialien zur Herstellung von Polyurethankunststoffen nach dem Isocyanat-Polyadditionsverfahren dar.

Hierzu werden die hydrophil modifizierten Polyisocyanate vorzugsweise in Form wäßriger Emulsionen eingesetzt, die in Kombination mit in Wasser dispergierten Polyhydroxylverbindungen im Sinne von wäßrigen Zweikomponenten-Systemen zur Umsetzung gebracht werden können. Der sehr niedrige Gehalt an monomeren Diisocyanaten von weniger als 0,10 Gew.-% ermöglicht dabei dem gewerblichen Anwender eine sichere Handhabung.

Gegebenenfalls können den nach dem erfindungsgemäßen Verfahren hergestellten hydrophil modifizierten Polyisocyanate vor der Emulgierung noch weitere nichthydrophilierte Polyisocyanate mit aliphatisch, cycloaliphatisch araliphatisch und/oder aromatisch gebundenen Isocyanatgruppen, insbesondere Lackpolyisocyanate der obengenannten Art, zugesetzt werden. In solchen Mischungen übernehmen die erfindungsgemäßen Verfahrensprodukte die Funktion eines Emulgators für den nachträglich zugemischten Anteil an nichthydrophilen Polyisocyanaten.

Besonders bevorzugt werden die erfindungsgemäßen nichtionisch hydrophil modifizierten Polyisocyanatgemische als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wäßrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden oder auch unter Verwendung von Zweikomponenten-Spritzpistolen erfolgen.

In diesem Zusammenhang seien als Lackbindemittel oder Lackbindemittelkomponenten beispielhaft erwähnt: in Wasser gelöste oder dispergierte, Hydroxylgruppen aufweisende Polyacrylate, insbesondere solche des Molekulargewichtsbereichs 1.000 bis 20.000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erfindungsgemäßen Polyisocyanatgemische alle in Wasser gelösten oder dispergierten Bindemittel, die gegenüber Isocyanaten reaktive Gruppen aufweisen, geeignet. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Ein weiterer Gegenstand der vorliegenden Erfindung ist ein Beschichtungsmittel enthaltend mindestens ein erfindungsgemäßes hydrophiles Uretdionstrukturen enthaltendes Polyisocyanat.

Bei der erfindungsgemäßen Verwendung als Vernetzerkomponente für wäßrige Lackbindemittel werden die erfindungsgemäßen hydrophilen Polyisocyanate im allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2:1 entsprechen.

Gegebenenfalls können die erfindungsgemäßen hydrophilen Polyisocyanate in untergeordneten Mengen auch nichtfunktionellen wäßrigen Lackbindemitteln zur Erzielung ganz spezieller Eigenschaften, beispielsweise als Additiv zur Haftverbesserung zugemischt werden.

Selbstverständlich können die erfindungsgemäßen hydrophilen Polyisocyanate auch in mit aus der Polyurethanchemie an sich bekannten Blockierungsmitteln blockierter Form in Kombination mit den obengenannten wäßrigen Lackbindemitteln oder Lackbindemittelkomponenten im Sinne von wäßrigen Einkomponenten-PUR-Einbrennsystemen eingesetzt werden. Geeignete Blockierungsmittel sind beispielsweise Malonsäurediethylester, Acetessigester, Acetonoxim, Butanonoxim, □-Caprolactam, 3,5-Dimethylpyrazol, 1,2,4-Triazol, Dimethyl-1,2,4-triazol, Imidazol oder beliebige Gemische dieser Blockierungsmittel.

Als Untergründe für die mit Hilfe der erfindungsgemäßen hydrophilen Polyisocyanate formulierten wäßrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im Allgemeinen besitzen die mit den erfindungsgemäßen hydrophilen Polyisocyanaten formulierten wäßrigen Beschichtungsmittel, denen gegebenenfalls die auf dem Lacksektor üblichen Hilfs- und Zusatzmittel, wie z. B. Verlaufshilfsmittel, Farbpigmente, Füllstoffe, Mattierungsmittel oder Emulgatoren, einverleibt werden können, schon bei Raumtemperaturtrocknung gute lacktechnische Eigenschaften.

Selbstverständlich lassen sie sich jedoch auch unter forcierten Bedingungen bei erhöhter Temperatur bzw. durch Einbrennen bei Temperaturen bis 260 °C trocknen.

Ein weiterer Gegenstand der vorliegenden Erfindung ist ein Substrat, beschichtet mit einem gegebenenfalls unter Wärmeeinwirkung ausgehärteten erfindungsgemäßen Beschichtungsmittel.

Aufgrund ihrer hervorragenden Wasseremulgierbarkeit, die eine homogene, besonders feinteilige Verteilung in wäßrigen Lackbindemitteln ermöglicht, führt die Verwendung der erfindungsgemäßen hydrophilen Polyisocyanate als Vernetzerkomponente für wäßrige Polyurethanlacke zu Beschichtungen mit hervorragenden optischen Eigenschaften, insbesondere hohem Oberflächenglanz, Verlauf und hoher Transparenz.

Neben der bevorzugten Verwendung als Vernetzerkomponenten für wäßrige 2K-PUR-Lacke eignen sich die erfindungsgemäßen hydrophilen Polyisocyanate hervorragend als Vernetzer für wäßrige Dispersionsklebstoffe, Leder- und Textilbeschichtungen oder Textildruckpasten, als Papierhilfsmittel, die frei von Adsorbierbaren Organisch gebundenen Halogenen (AOX) sind, oder auch als Zusatzmittel für mineralische Baustoffe, beispielsweise Beton- oder Mörtelmassen.

Die für das erfindungsgemäße Verfahren als bevorzugt gekennzeichneten Merkmale sind auch für die weiteren Erfindungsgegenstände bevorzugt.

Die nachfolgenden Beispiele dienen zur Verdeutlichung der vorliegenden Erfindung, sollen aber keinesfalls als Einschränkung des Schutzbereichs verstanden werden.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s-1.

Die Restmonomerengehalte wurden nach DIN EN ISO 10283:2007-11 gaschromatographisch mit internem Standard gemessen.

Die Messung der Platin-Cobalt-Farbzahl erfolgte spektrofotometrisch nach DIN EN ISO 6271-2:2005-03 mit einem LICO 400-Spektrofotometer der Fa. Lange, DE.

Die Gehalte (mol-%) der in den Polyisocyanaten A) vorliegenden Uretdion-, gegebenenfalls Isocyanurat-, Iminooxadiazindion-, Allophanat-, Biuret-, Urethan- und/oder Oxadiazintrionstrukturen wurden aus den Integralen protonenentkoppelter ¹³C-NMR-Spektren (aufgenommen an einem Gerät Bruker DPX-400) errechnet und beziehen sich jeweils auf die Summe an vorliegenden Uretdion-, Isocyanurat-, Allophanat-, Biuret-, Iminooxadiazindion- und/oder Oxadiazintrionstrukturen. Die Gehalte (mol-%) an gegebenenfalls in den Polyisocyanaten A) vorliegenden Uretonimistrukturen wurden ebenfalls aus den Integralen der protonenentkoppelten ¹³C-NMR-Spektren errechnet und beziehen sich auf Uretdionstrukturen. Im Falle von in CDCl₃ gelösten HDI-Polyisocyanaten weisen die einzelnen Strukturelemente folgende chemische Verschiebungen (in ppm) auf: Uretdion: 157.1; Isocyanurat: 148.4; Iminooxadiazindion: 147.8, 144.3 und 135.3; Allophanat: 155.7 und 153.8, Biuret: 155,5; Urethan: 156,3; Oxadiazintrion: 147,8 und 143,9; Uretonimin: 158,7 und 144,6.

Die Phosphorgehalte in den Ausgangspolyisocyanaten A) und nichtionisch hydrophilen organischen Verbindungen B) wurden durch induktiv gekoppelte Plasma-Atom-Emissionsspektrometrie (ICP-OES) nach DIN EN ISO 11885:2009-09 nach Mikrowellenaufschluss bestimmt. Die Nachweisgrenze liegt bei diesem Verfahren bei <1 ppm.

### Ausgangsverbindungen

### Polvisocvanate A)

### Ausgangspolyisocyanat A1)

Polyisocyanat, hergestellt durch katalytische Trimerisierung von HDI in Anlehnung an Beispiel 11 der EP-A 330 966, mit der Änderung, dass die Reaktion bei einem NCO-Gehalt der Rohmischung von 40 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt.

Das Produkt wies folgende Kenndaten und Zusammensetzung auf:

| | |
|---|---|
| NCO-Gehalt: | 21,7 % |
| monomeres HDI: | 0,06 % |
| Viskosität (23 °C): | 3080 mPas |
| Farbzahl (Hazen): | 8 |
| Phosphorgehalt: | 8 ppm |
| | |
| Uretdionstrukturen: | 0,9 mol-% |
| Isocyanuratstrukturen: | 90,1 mol-% |
| Iminooxadazindionstrukturen: | 3,6 mol-% |
| Allophanatstrukturen: | 5,4 mol-% |
| Uretoniminstrukturen: | nicht nachweisbar |

### Ausgangspolyisocyanat A2)

Polyisocyanat, hergestellt in Anlehnung an Vergleichsbeispiel 2a der WO 2018/153801, durch Trimeriserung von HDI unter Verwendung einer 20 %-igen Lösung von 5-Azonia-spiro[4.5]decaniumhydrogendifluorid in 2-Ethylhexanol als Katalysator, Reaktionsstoppung bei einem NCO-Gehalt der Rohmischung von 44,8 % durch Zugabe einer zur Katalysatormenge äquivalenten Menge einer 70 %igen Lösung von Dodecylbenzolsulfonsäure in Isopropanol und anschließende Abtrennung des nicht umgesetzten HDI durch Dünnschichtdestillation bei einer Temperatur von 130°C und einem Druck von 0,2 mbar.

Das Produkt wies folgende Kenndaten und Zusammensetzung auf:

| | |
|---|---|
| NCO-Gehalt: | 23,5 % |
| monomeres HDI: | 0,11 % |
| Viskosität (23 °C): | 720 mPas |
| Farbzahl (Hazen): | 49 |
| Phosphorgehalt: | < 1 ppm |
| Uretdionstrukturen: | 4,9 mol-% |
| Isocyanuratstrukturen: | 46,7 mol-% |
| Iminooxadazindionstrukturen: | 48,4 mol-% |
| Uretoniminstrukturen: | nicht nachweisbar |

### Ausgangspolyisocyanat A3)

Polyisocyanat, hergestellt durch thermische Dimerisierung und anschließende Hexamethyldisilazankatalysierte Trimerisierung von HDI nach Beispiel 4 der US 2004/0106762.

Das Produkt wies folgende Kenndaten und Zusammensetzung auf:

| | |
|---|---|
| NCO-Gehalt: | 23,1 % |
| monomeres HDI: | 0,10 % |
| Viskosität (23 °C): | 710 mPas |
| Farbzahl (Hazen): | 8 |
| Phosphorgehalt: | < 1 ppm |
| Uretdionstrukturen: | 19,9 mol-% |
| Isocyanuratstrukturen: | 69,7 mol-% |
| Urethanstrukturen: | 10,4 mol-% |
| Uretoniminstrukturen: | 0,15 mol-% (bezogen auf Uretdionstrukturen) |

### Ausgangspolyisocyanat A4)

Polyisocyanat, hergestellt nach Beispiel 11 der EP-A 330 966, mit der Änderung, dass als Katalysatorlösemittel 2-Ethylhexanol statt 2-Ethyl-1,3-hexandiol eingesetzt wurde und die Reaktion bei einem NCO-Gehalt der Rohmischung von 42,5 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt.

Das Produkt wies folgende Kenndaten und Zusammensetzung auf:

| | |
|---|---|
| NCO-Gehalt: | 22,9 % |
| monomeres HDI: | 0,08 % |
| Viskosität (23 °C): | 1210 mPas |
| Farbzahl (Hazen): | 10 |
| Phosphorgehalt: | 14 ppm |
| Uretdionstrukturen: | 1,9 mol-% |
| Isocyanuratstrukturen: | 89,0 mol-% |
| Iminooxadazindionstrukturen: | 4,3 mol-% |
| Allophanatstrukturen: | 4,8 mol-% |
| Uretoniminstrukturen: | nicht nachweisbar |

### Nichtionisch hydrophile organische Verbindung B)

**B1)** Methoxypolyethylenglykol MPEG 350,

| | |
|---|---|
| OH-Zahl: | 160 mg KOH/g, Äquivalentgewicht: 351 g/mol |
| pH-Wert: | 6,3 |
| Phosphorgehalt: | < 1 ppm |

**B2)** Methoxypolyethylenglykol MPEG 350,

| | |
|---|---|
| OH-Zahl: | 162 mg KOH/g, Äquivalentgewicht: 346 g/mol |
| pH-Wert: | 3,7 |
| Phosphorgehalt: | 120 ppm |

**B3)** Methoxypolyethylenglykol MPEG 500,

| | |
|---|---|
| OH-Zahl: | 112 mg KOH/g, Äquivalentgewicht: 501 g/mol |
| pH-Wert: | 4,9 |
| Phosphorgehalt: | < 1 ppm |

**B4)** Methoxypolyethylenglykol MPEG 500,

| | |
|---|---|
| OH-Zahl: | 111 mg KOH/g, Äquivalentgewicht: 505 g/mol |
| pH-Wert: | 3,9 |
| Phosphorgehalt: | 110 ppm |

### Beispiel 1 (erfindungsgemäß)

870 g (4,50 val) der Polyisocyanatkomponente A1) wurden bei 100 °C unter trockenem Stickstoff und Rühren vorgelegt, innerhalb von 30 min mit 130 g (0,37 val) der nichtionisch hydrophilen organischen Verbindung B1) versetzt und bei dieser Temperatur weiter gerührt, bis der NCO-Gehalt der Mischung nach etwa 2 h auf den einer vollständigen Urethanisierung entsprechenden Wert gefallen war. Nach Abkühlen auf Raumtemperatur lag ein farbloses, völlig klares, hydrophil modifiziertes Polyisocyanat mit folgenden Kenndaten vor:

| | |
|---|---|
| NCO-Gehalt: | 17,2 % |
| monomeres HDI: | 0,05 % |
| Viskosität (23 °C): | 3410 mPas |
| Farbzahl (Hazen): | 10 |
| P-Gehalt (berechnet): | 7 ppm |

### Beispiel 2 (erfindungsgemäß)

Beispiel 1 wurde wiederholt, wobei der Polyisocyanatkomponente A1) vor Beginn der Zugabe der nichtionisch hydrophilen organischen Verbindung B1) 0,5 g (50 ppm bezogen auf Gesamtansatz) Dibutylphosphat als Stabilisator zugesetzt wurden. Es wurde ein farbloses, völlig klares, hydrophil modifiziertes Polyisocyanat mit folgenden Kenndaten erhalten:

| | |
|---|---|
| NCO-Gehalt: | 17,3 % |
| monomeres HDI: | 0,07 % |
| Viskosität (23 °C): | 3290 mPas |
| Farbzahl (Hazen): | 10 |
| P-Gehalt (berechnet): | 14,3 ppm |

### Beispiel 3 (Vergleich)

Nach dem in Beispiel 1 beschriebenen Verfahren wurden 870 g (4,50 val) der Polyisocyanatkomponente A1) mit 130 g (0,38 val) der nichtionisch hydrophilen organischen Verbindung B2) umgesetzt. Man erhielt ein farbloses, völlig klares, hydrophil modifiziertes Polyisocyanat mit folgenden Kenndaten:

| | |
|---|---|
| NCO-Gehalt: | 17,3 % |
| monomeres HDI: | 0,12 % |
| Viskosität (23 °C): | 3200 mPas |
| Farbzahl (Hazen): | 9 |
| P-Gehalt (berechnet): | 22,6 ppm |

### Beispiel 4 (erfindungsgemäß)

830 g (4,64 val) der Polyisocyanatkomponente A2) wurden bei 100 °C unter trockenem Stickstoff und Rühren vorgelegt, innerhalb von 30 min mit 170 g (0,48 val) der nichtionisch hydrophilen organischen Verbindung B1) versetzt und bei dieser Temperatur weiter gerührt, bis der NCO-Gehalt der Mischung nach etwa 2 h auf den einer vollständigen Urethanisierung entsprechenden Wert gefallen war. Nach Abkühlen auf Raumtemperatur lag ein leicht gelbes, völlig klares, hydrophil modifiziertes Polyisocyanat mit folgenden Kenndaten vor:

| | |
|---|---|
| NCO-Gehalt: | 17,5 % |
| monomeres HDI: | 0,09 % |
| Viskosität (23 °C): | 815 mPas |
| Farbzahl (Hazen): | 37 |
| P-Gehalt (berechnet): | < 1 ppm |

### Beispiel 5 (Vergleich)

Nach dem in Beispiel 3 beschriebenen Verfahren wurden 830 g (4,64 val) der Polyisocyanatkomponente A2) mit 170 g (0,48 val) der nichtionisch hydrophilen organischen Verbindung B2) umgesetzt. Man erhielt ein leicht gelbes, völlig klares, hydrophil modifiziertes Polyisocyanat mit folgenden Kenndaten:

| | |
|---|---|
| NCO-Gehalt: | 17,5 % |
| monomeres HDI: | 0,13 % |
| Viskosität (23 °C): | 810 mPas |
| Farbzahl (Hazen): | 34 |
| P-Gehalt (berechnet): | 20,4 ppm |

### Beispiel 6 (erfindungsgemäß)

800 g (4,40 val) der Polyisocyanatkomponente A3) wurden bei 80 °C unter trockenem Stickstoff und Rühren vorgelegt, innerhalb von 30 min mit 200 g (0,40 val) der nichtionisch hydrophilen organischen Verbindung B3) versetzt und bei dieser Temperatur weiter gerührt, bis der NCO-Gehalt der Mischung nach etwa 3,5 h auf den einer vollständigen Urethanisierung entsprechenden Wert gefallen war. Nach Abkühlen auf Raumtemperatur lag ein leicht gelbes, völlig klares, hydrophil modifiziertes Polyisocyanat mit folgenden Kenndaten vor:

| | |
|---|---|
| NCO-Gehalt: | 16,8 % |
| monomeres HDI: | 0,07 % |
| Viskosität (23 °C): | 835 mPas |
| Farbzahl (Hazen): | 7 |
| P-Gehalt (berechnet): | < 1 ppm |

### Beispiel 7 (Vergleich)

Nach dem in Beispiel 5 beschriebenen Verfahren wurden 800 g (4,13 val) der Polyisocyanatkomponente A3) mit 200 g (0,40 val) der nichtionisch hydrophilen organischen Verbindung B4) umgesetzt. Man erhielt ein farbloses, völlig klares, hydrophil modifiziertes Polyisocyanat mit folgenden Kenndaten:

| | |
|---|---|
| NCO-Gehalt: | 15,7 % |
| monomeres HDI: | 0,13 % |
| Viskosität (23 °C): | 260 mPas |
| Farbzahl (Hazen): | 8 |
| P-Gehalt (berechnet): | 22,0 ppm |

Die Beispiele 1, 2, 4 und 6 belegen, dass die Umsetzung der Ausgangspolyisocyanate A1), A2) und A3), die Uretdionstrukturen und weniger als 0,20 mol-% an Uretoniminstrukturen bezogen auf die Uretdionstrukturen enthalten, mit phosphorfreien Polyetheralkoholen bei 100°C nichtionisch hydrophilierte Polyisocyanate liefert, die Monomergehalte von unter 0,10 % aufweisen. Dagegen zeigen die Vergleichsbeispielen 3, 5 und 7, dass die Umsetzung derselben Ausgangspolyisocyanate A1), A2) und A3) mit Polyetheralkoholen, die mehr als 50 ppm Phosphor enthalten, zu hydrophil modifizierten Polyisocyanaten mit Monomergehalten von über 0,10 % führt, wenn gleichzeitig die Summe an Phosphor im jeweiligen Ausgangspolyisocyanat und Polyetheralkohol mehr als 20 ppm beträgt.

### Beispiele 8 bis 13 (erfindungsgemäß und Vergleich)

Nach dem in Beispiel 1 beschriebenen Verfahren wurden die Polyisocyanatkomponente A1) bzw. A4) jeweils mit aus Gemischen der Polyetheralkohole B1) und B2) bestehenden nichtionisch hydrophilen organischen Verbindungen, die unterschiedliche Mengen an Phosphor enthielten umgesetzt. Die nachfolgende Tabelle zeigt die jeweiligen Zusammensetzungen der Reaktionsgemische, Gesamt-Phosphorgehalte von Polyether- und Polyisocyanatkomponente sowie die Kenndaten der erhaltenen Reaktionsprodukte.

| **Beispiel** | | **8** | **9** Vergleich | **10** | **11** Vergleich | **12** | **13** Vergleich |
|---|---|---|---|---|---|---|---|
| Polyisocyanatkomponente A1) | [Gew.-Teile] | 70,0 | 70,0 | 75,0 | 75,0 | - | - |
| Polyisocyanatkomponente A4) | [Gew.-Teile] | - | - | - | - | 98,0 | 98,0 |
| Polyetherkomponente B1) | [Gew.-Teile] | 20,0 | 15,0 | 14,5 | 12,5 | 1,2 | 1,0 |
| Polyetherkomponente B2) | [Gew.-Teile] | 10,0 | 15,0 | 10,5 | 12,5 | 0,8 | 1,0 |
| Dibutylphosphat | [ppm] | - | - | - | - | 30 | 50 |
| P-Gehalt gesamt, Polyetherkomponente | [ppm] | 40 | 60 | 50 | 60 | 48 | 60 |
| P-Gehalt gesamt, hydrophiles Polyisocyanat* | [ppm] | 17,6 | 23,6 | 18,5 | 21,0 | 19,1 | 22,3 |
| NCO-Gehalt | [%] | 11,6 | 11,6 | 13,3 | 13,3 | 22,2 | 22,2 |
| monomeres HDI | [%] | 0,06 | 0,11 | 0,07 | 0,11 | 0,08 | 0,12 |
| Viskosität (23°C) | [mPas] | 3600 | 3580 | 3510 | 3570 | 1240 | 1245 |
| Farbzahl (Hazen) | | 9 | 8 | 8 | 8 | 11 | 10 |

| | | | | | | | |
|---|---|---|---|---|---|---|---|
| *inklusive P aus Dibutylphosphat (Stabilisator) | | | | | | | |

Die erfindungsgemäßen Beispiele 8, 10 und 12 zeigen, dass die Umsetzung der Ausgangspolyisocyanate A1) und A4), die Uretdionstrukturen und weniger als 0,20 mol-% an Uretoniminstrukturen bezogen auf die Uretdionstrukturen enthalten, mit Polyetheralkoholen deren Phosphorgehalt höchstens 50 ppm beträgt, bei 100 °C nichtionisch hydrophilierte Polyisocyanate mit Monomergehalten von unter 0,10 % ergibt, wenn ihr Gesamtgehalt an Phosphor höchstens 20 ppm beträgt.

Die Vergleichsbeispiele 9, 11 und 13 lieferten dagegen ausgehend von denselben Polyisocyanatkomponenten in Kombination mit Polyetheralkoholgemischen, die mehr als 50 ppm Phosphor enthielten, bei Phosphor-Gesamtgehalten im Reaktionsgemisch von mehr als 20 ppm hydrophil modifizierte Polyisocyanaten mit Monomergehalten von jeweils mehr als 0,10 %.

## Patentansprüche

1. Verfahren zur Herstellung hydrophil modifizierter Polyisocyanate mit einem Gehalt an monomeren Diisocyanaten von weniger als 0,10 Gew.-%, umfassend eine Umsetzung von
A) mindestens einer Polyisocyanatkomponente mit aliphatisch, cycloaliphatisch, araliphatisch und/oder aromatisch gebundenen Isocyanatgruppen, die mindestens Uretdionstrukturen und weniger als 0,20 mol-% an Uretoniminstrukturen bezogen auf die Uretdionstrukturen aufweist, mit
B) mindestens einer nichtionisch hydrophilen organischen Verbindung, die mindestens eine gegenüber Isocyanaten reaktive Gruppe aufweist,
wobei die nichtionisch hydrophile organische Verbindung B) einen Gehalt an Phosphor von höchstens 50 ppm aufweist, und der Gesamtgehalt an Phosphor bezogen auf die Komponenten A) und B) des hydrophil modifizierten Polyisocyanats höchstens 20 ppm beträgt.

2. Verfahren gemäß Anspruch 1, **dadurch gekennzeichnet, dass** die Polyisocyanatkomponente A) einen Gehalt an Uretdionstrukturen von mindestens 0,6 mol-%, vorzugsweise von 0,8 bis 25 mol-%, jeweils bezogen auf die Gesamtmenge aller im Polyisocyanat vorliegenden Uretdion-, gegebenenfalls Isocyanurat-, Iminooxadiazindion-, Allophanat-, Biuret-, Urethan- und/oder Oxadiazintrionstrukturen aufweist.

3. Verfahren gemäß einem der Ansprüche 1 und 2, **dadurch gekennzeichnet, dass** die Polyisocyanatkomponente A) mindestens Uretdion- und Isocyanuratstrukturen enthält.

4. Verfahren gemäß einem der Ansprüche 1 und 2, **dadurch gekennzeichnet, dass** die Polyisocyanatkomponente A) ausschließlich aliphatisch und/oder cycloaliphatisch gebundenen Isocyanatgruppen aufweist.

5. Verfahren gemäß einem der Ansprüche 1 bis 4, **dadurch gekennzeichnet, dass** es sich bei der Polyisocyanatkomponente A) um eine auf Basis von PDI, HDI, IPDI und/oder 2,4'- und 4,4'-Diisocyanatodicyclohexylmethan handelt.

6. Verfahren gemäß einem der Ansprüche 1 bis 5, **dadurch gekennzeichnet, dass** es sich bei der nichtionisch hydrophilen organischen Verbindung B) um ein- oder mehrwertige, im statistischen Mittel 5 bis 50 Ethylenoxideinheiten pro Molekül aufweisende Polyalkylenoxidpolyetheralkohole handelt.

7. Verfahren gemäß Anspruch 6, **dadurch gekennzeichnet, dass** es sich bei der nichtionisch hydrophilen organischen Verbindung B) um reine Polyethylenoxidpolyetheralkohole oder gemischte Polyalkylenoxidpolyetheralkohole handelt, deren Alkylenoxideinheiten zu mindestens 70 mol-% aus Ethylenoxideinheiten bestehen.

8. Verfahren gemäß Anspruch 6 und 7, **dadurch gekennzeichnet, dass** die nichtionisch hydrophile organische Verbindung B) einen pH-Wert, gemessen an einer 5 %igen Lösung in Wasser, von 4,0 bis 8,0, vorzugsweise von 4,5 bis 7,5, besonders bevorzugt von 5,0 bis 7,0 aufweist.

9. Verfahren gemäß einem der Ansprüche 1 bis 8, **dadurch gekennzeichnet, dass** die nichtionisch hydrophilen Verbindungen B) in einer Menge von bis zu 30 Gew.-%, vorzugsweise von 2 bis 25 Gew.-%, besonders bevorzugt von 5 bis 20 Gew.-%, ganz besonders bevorzugt von 9 bis 17 Gew.-%, bezogen auf die Gesamtmenge der verwendeten Ausgangskomponenten A) und B) zum Einsatz kommen.

10. Verfahren gemäß einem der Ansprüche 1 bis 9, **dadurch gekennzeichnet, dass** die nichtionisch hydrophile organische Verbindung B) einen Gehalt an Phosphor von höchstens 40 ppm, vorzugsweise von höchstens 30 ppm, besonders bevorzugt keinen nachweisbaren Phosphor aufweist, wobei die Phosphorgehalte durch induktiv gekoppelte Plasma-Atom-Emissionsspektrometrie (ICP-OES) nach DIN EN ISO 11885:2009-09 nach Mikrowellenaufschluss bestimmt werden.

11. Verfahren gemäß einem der Ansprüche 1 bis 10, **dadurch gekennzeichnet, dass** der Gesamtgehalt an Phosphor in dem aus den Komponenten A) und B) bestehenden hydrophil modifizierten Polyisocyanat höchsten 20 ppm, vorzugsweise von 3 bis 19 ppm, besonders bevorzugt von 5 bis 18 ppm beträgt.

12. Nichtionisch hydrophil modifizierte Polyisocyanate, die Uretdionstrukturen und weniger als 0,20 mol-% an Uretoniminstrukturen bezogen auf die Uretdionstrukturen enthalten und weniger als 0,10 Gew.-% an monomeren Diisocyanaten und höchstens 20 ppm an Phosphor aufweisen.

13. Verwendung der nichtionisch hydrophil modifizierten Polyisocyanate gemäß Anspruch 12 als Ausgangskomponente bei der Herstellung von Polyurethankunststoffen.

14. Beschichtungsmittel enthaltend nichtionisch hydrophil modifizierte Polyisocyanate gemäß Anspruch 12.

15. Substrat, beschichtet mit einem gegebenenfalls unter Wärmeeinwirkung ausgehärteten Beschichtungsmittel gemäß Anspruch 14.
